# EUROPEAN PATENT APPLICATION

(11) **EP 4 425 641 A1**
(43) Date of publication of application: **04.09.2024**
(21) Application number: 23892770.1
(22) Date of filing: 03.01.2023
(51) Int. Cl.: H01M 10/42, H01M 4/04

(54) **THREADING DEVICE AND METHOD FOR RECONNECTING STRIP BY USING THREADING DEVICE**

(71) Applicant: Contemporary Amperex Technology Co., Limited, Ningde, Fujian 352100 (CN)
(72) Inventor: ZHAN, Bingyang, Ningde, Fujian 352100 (CN); ZHANG, Jingdong, Ningde, Fujian 352100 (CN); ZHEN, Zhihui, Ningde, Fujian 352100 (CN); CHEN, Weigang, Ningde, Fujian 352100 (CN); WANG, Qiangjun, Ningde, Fujian 352100 (CN); LV, Shengjuan, Ningde, Fujian 352100 (CN)
(74) Representative: Holt, Lucy Rose
(86) International application number: PCT/CN2023/070121
(87) International publication number: WO 2024/145747

(57) **Abstract**

Some embodiments of this application provide a strip threading apparatus and a method for splicing a strip material by using the strip threading apparatus. The strip threading apparatus includes: a slide rail, where the slide rail is disposed along a conveyance path of the strip material; a slide rod apparatus, where the slide rod apparatus is detachably connected to the slide rail; and a traction body, where the traction body is slidable along the slide rail. This strip threading apparatus enables splicing of broken strip materials.

## Description

### TECHNICAL FIELD

This application relates to the field of battery manufacturing, and in particular, to a strip threading apparatus and a method for splicing a strip material by using the strip threading apparatus.

### BACKGROUND

A production process of a battery may include an electrode plate manufacturing process. In the electrode plate manufacturing process, a strip material needs to be conveyed from an unwinding apparatus to a winding apparatus. The strip material may break off during the conveyance. In this case, the strip material needs to be spliced.

Generally, an apparatus for splicing a strip material employs a chain, a wire rope, a belt, a synchronous belt, and the like, thereby involving a complicated structure and high cost. Therefore, the efficiency of battery production urgently needs to be improved.

### SUMMARY

This application provides a strip threading apparatus and a method for splicing a strip material by using the strip threading apparatus. The strip threading apparatus is simple in structure and cost-effective. Splicing operations performed by using the strip threading apparatus are convenient, thereby enhancing production efficiency.

According to a first aspect, a strip threading apparatus is provided. The strip threading apparatus includes: a slide rail, where the slide rail is disposed along a conveyance path of a strip material; a slide rod apparatus, where the slide rod apparatus is detachably connected to the slide rail; and a traction body, where the traction body is slidable along the slide rail.

In the technical solution of this application, the slide rail is disposed along the conveyance path of the strip material. The slide rod apparatus is disposed and detachably connected to the slide rail. The traction body is disposed and slidable along the slide rail. In this way, when a strip material is broken, the broken strip material can be spliced. On the conveyance path of the strip material, the slide rail is disposed in one piece. The slide rod apparatus is detachably connected to any position on the slide rail. The strip material can be spliced at any time. The structure is simple, and the operations are convenient, thereby enhancing production efficiency of electrode plates, and in turn, enhancing production efficiency of batteries.

In some possible embodiments, the slide rail includes a first rail and a second rail disposed opposite to each other.

In the above embodiment, the slide rail includes the first rail and the second rail disposed opposite to each other, thereby restricting the conveyance direction of the strip material. The overall structure is symmetrical. During conveyance of the strip material, the force on the strip material is uniform, thereby facilitating splicing of the strip material.

In some possible embodiments, the first rail and/or the second rail is a hollow sealed rail. The traction body is configured to slide inside the sealed rail.

In the above embodiments, the hollow sealed rail is used as the slide rail, thereby reducing the weight of the rail. The traction body is disposed in the sealed rail, thereby reducing the space occupied by the strip threading apparatus.

In some possible embodiments, the sealed rail is connected to a pneumatic control apparatus, so that the traction body slides in the sealed rail under an action of a pneumatic pressure difference.

In the above embodiments, the sealed rail is connected to the pneumatic control apparatus. The traction body is pushed in the sealed rail by using the pneumatic pressure difference, thereby pushing the slide rod apparatus to slide along the slide rail, avoiding the need of an additional traction apparatus, simplifying the structure, and reducing the weight of the strip threading apparatus.

In some possible embodiments, the traction body is magnetically connected to the slide rod apparatus to pull the slide rod apparatus.

In the above embodiments, with the traction body being magnetically connected to the slide rod apparatus, the slide rod apparatus can be driven to slide without direct contact between the traction body and the slide rod apparatus, thereby avoiding the need of an additional connecting structure. The structure is simple and easy to implement.

In some possible embodiments, when the sealed rail is a sealed circular tube, the traction body includes a cylindrical magnetic ball and a sealing ring. A diameter of the magnetic ball is less than an inside diameter of the sealed circular tube. The sealing ring is socketed to a surface of the magnetic ball to seal a clearance between the magnetic ball and the sealed circular tube.

In the above embodiments, the traction body is designed to include a magnetic ball and a sealing ring. In this way, an attraction force between the magnetic ball and the slide rod apparatus is greater, a firmer magnetic connection is implemented between the magnetic ball and the slide rod apparatus, and the gas is isolated between the two ends of the traction body. In this way, the pneumatic pressure difference can vary between the two ends. Under the action of the pneumatic pressure difference, the traction body can slide along the sealed circular tube.

In some possible embodiments, a difference between the diameter of the magnetic ball and the inside diameter of the sealed circular tube is 1 to 3 mm.

In the above embodiments, by defining the difference between the diameter of the magnetic ball and the inside diameter of the sealed circular tube, a clearance is left between the magnetic ball and the sealed circular tube. In this way, it is ensured that, when the magnetic ball moves to a position at which the bending radius of the sealed circular tube is relatively small, the magnetic ball can turn the corner smoothly, and at the same time, the magnetic force is relatively strong and the magnetic connection is stable between the magnetic ball and the slide rod apparatus, thereby enhancing the strip threading/splicing efficiency of the entire strip threading apparatus.

In some possible embodiments, a length of the magnetic ball along a conveyance direction of the strip material is 40 to 100 mm.

The above embodiments, by defining the length of the magnetic ball and specifying the optimized length value of the magnetic ball, this application implements smooth sliding of the magnetic ball in the sealed circular tube while implementing a relatively strong magnetic connection between the magnetic ball and the slide rod apparatus.

In some possible embodiments, a chamfered rounded corner structure is formed at both ends of the magnetic ball along a conveyance direction of the strip material.

In the above embodiments, both ends of the magnetic ball are structured as a chamfered rounded corner, thereby ensuring that the magnetic ball can turn the corner smoothly when sliding to a position of a minimum turning radius in the slide rail.

In some possible embodiments, the slide rod apparatus includes a connecting rod and a slide block mechanism. An end portion of the connecting rod is connected to the slide block mechanism. The slide block mechanism is slidably connected to the slide rail.

In the above embodiments, the slide rod apparatus is constrained in the slide rail, and can slide by means of the slide block mechanism. The structure is simple and easy to implement.

In some possible embodiments, a mounting slot is disposed on the slide block mechanism. The end portion of the connecting rod is disposed in the mounting slot so as to get connected to the slide block mechanism.

In the above embodiments, a mounting slot for mounting the end portion of the connecting rod is disposed on the slide block mechanism, so that the connecting rod can be connected to the slide block mechanism. The connecting rod is detachable from the slide block mechanism, so that the slide rod apparatus can be easily connected to any position on the slide rail. The structure is simple and the operations are convenient.

In some possible embodiments, the slide block mechanism includes a pressing block configured to compact the end portion of the connecting rod in the mounting slot after the end portion of the connecting rod is disposed in the mounting slot.

In the above embodiments, the connecting rod is compacted by the pressing block, so that the connection between the connecting rod and the slide block mechanism is firmer. This connection manner is simple in structure and easy to operate.

In some possible embodiments, a surface in contact with the pressing block at the end portion of the connecting rod is a flat face.

In the above embodiments, the flat face enables the pressing block to compact the end portion of the connecting rod more firmly, and makes the bonding tighter.

In some possible embodiments, the slide block mechanism further includes a fixing piece configured to fix the pressing block.

In the above embodiments, the pressing block is fixed by the fixing piece, so that the connecting rod can be fixed to the slide block mechanism. The connecting rod is detachable from the slide block mechanism. The structure is simple, and the operations such as mounting and disassembling are easy.

In some possible embodiments, a slide slot is disposed on the slide block mechanism. The slide block mechanism is slidably connected to the slide rail through the slide slot.

In the above embodiments, the slide block mechanism is constrained in the slide rail by means of the slide slot, and further, the slide rod apparatus is constrained in the slide rail, thereby simplifying the connection manner between the slide rod apparatus and the slide rail. The structure is simple and easy to implement.

In some possible embodiments, the slide block mechanism includes a guide apparatus. In a case that the slide rail is accommodated in the slide slot, the guide apparatus abuts on the slide rail to constrain the slide block mechanism.

In the above embodiments, the guide apparatus disposed in the slide block mechanism can constrain the slide block mechanism and limit the sliding direction of the slide block mechanism, thereby facilitating the operations of strip threading or splicing.

In some possible embodiments, the guide apparatus includes a ball, a spring, and an adjustable jackscrew. The ball abuts on the slide rail so that the slide block mechanism slides along the slide rail. The spring abuts on the ball. The adjustable jackscrew is configured to adjust deformation of the spring to adjust a relative position between the slide block mechanism and the slide rail.

In the above embodiments, the guide apparatus is designed to include the ball, spring, and adjustable jackscrew, so that the friction between the slide block structure and the slide rail is rolling friction that generates a relatively small friction force. In addition, the position of the slide block mechanism relative to the slide rail is adjusted by the spring, thereby implementing adjustability of the relative position, friction force, and the like between the slide rod apparatus and the slide rail, and facilitating threading or splicing of the strip material.

In some possible embodiments, the slide block mechanism includes four guide apparatuses. The four guide apparatuses are disposed symmetrically.

In the above embodiments, the four guide apparatuses are disposed symmetrically, thereby constraining the slide block mechanism in three directions x, y, and z, positioning the slide rod apparatus, and facilitating the operations of strip threading or splicing.

In some possible embodiments, a clearance size between the slide slot and the slide rail is 1 to 3 mm.

In the above embodiments, the clearance size between the slide slot and the slide rail is defined, thereby preventing the slide rod apparatus from being stuck at a position of a relatively small bending radius in the slide rail, and at the same time, ensuring stability of the magnetic connection between the slide rod apparatus and the traction body, and enhancing the threading/splicing efficiency of the strip threading apparatus.

In some possible embodiments, a chamfered rounded corner structure is formed at both ends of the slide slot along a conveyance direction of the strip material.

In the above embodiments, both ends of the slide slot are designed as a chamfered rounded corner structure, thereby preventing the slide rod apparatus from being stuck at the position of a minimum turning radius when sliding along the slide rail.

In some possible embodiments, the connecting rod is a hollow circular tube.

In the above embodiments, the connecting rod is designed as a hollow circular tube, thereby reducing the weight of the connecting rod, and in turn, reducing the weight of the entire strip threading apparatus, and facilitating operations such as strip threading or splicing.

A second aspect provides a method for splicing a strip material by using a strip threading apparatus. The strip material may be spliced by using the strip threading apparatus according to the first aspect or any one of possible embodiments of the first aspect.

In the technical solution of this application, the strip material is spliced by using the above strip threading apparatus. The splicing method is simple, and enables quick splicing of the strip material, thereby enhancing the production efficiency of batteries.

In some possible embodiments, the strip material is broken into a first strip material and a second strip material. The first strip material is upstream of the second strip material along a conveyance direction of the strip material. The method includes: connecting, at a break end of the second strip material, the slide rod apparatus and the slide rail, and connecting the slide rod apparatus and the second strip material; driving the traction body to the break end of the second strip material so that the traction body pulls the slide rod apparatus to slide along the slide rail to the break end of the first strip material; and splicing the first strip material and the second strip material.

In the above embodiment, the first strip material and the second strip material are spliced by means of the slide rail, the slide rod apparatus, and the traction body included in the strip threading apparatus, so that the broken strip material can be spliced quickly at any position. The splicing operation is simple, thereby enhancing production efficiency of batteries.

### BRIEF DESCRIPTION OF DRAWINGS

To describe the technical solutions of some embodiments of this application more clearly, the following outlines the drawings used in the embodiments of this application. Evidently, the drawings outlined below are merely a part of embodiments of this application. A person of ordinary skill in the art may derive other drawings from the outlined drawings without making any creative efforts.
FIG. 1 is a schematic flowchart of an electrode plate manufacturing process according to an embodiment of this application;
FIG. 2 is a schematic structural diagram of a strip threading apparatus according to an embodiment of this application;
FIG. 3 is a schematic structural diagram of a traction body included in a strip threading apparatus according to an embodiment of this application;
FIG. 4 is a schematic structural diagram of a slide rod apparatus included in a strip threading apparatus according to an embodiment of this application;
FIG. 5 is a schematic flowchart of a method for splicing a strip material by using a strip threading apparatus according to an embodiment of this application; and
FIG. 6 is a schematic flowchart of a method for splicing a strip material by using a strip threading apparatus according to an embodiment of this application; and

The drawings are not drawn to scale.

### List of reference numerals:

20 strip threading apparatus
21 slide rail
22 slide rod apparatus
23 traction body
21a first rail
21b second rail
231 magnetic ball
232 sealing ring
222 connecting rod
221 slide block mechanism
2211 mounting slot
2212 pressing block
2213 fixing piece
2214 slide slot
2215 guide apparatus
2215a ball
2215b spring
2215c adjustable jackscrew
30 idler mechanism
31 idler

### DETAILED DESCRIPTION OF EMBODIMENTS

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

In the description of this application, unless otherwise specified, "a plurality of" means at least two in number; the terms such as "up", "down", "left", "right", "in", and "out" indicating a direction or a position relationship are merely intended for ease or brevity of description of this application, but do not indicate or imply that the mentioned device or component is necessarily located in the specified direction and position or constructed or operated in the specified direction and position. Therefore, such terms are not to be understood as a limitation on this application. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

The directional terms appearing in the following description indicate the directions shown in the drawings, but are not intended to limit specific structures in this application. In the description of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

In embodiments of this application, the same reference numeral denotes the same component. For brevity, detailed descriptions of the same component are omitted in a different embodiment. Understandably, dimensions such as thickness, length, and width of various components in some embodiments of this application shown in the drawings, and dimensions such as overall thickness, length, and width of an integrated device are merely illustrative descriptions, but do not constitute any limitation on this application.

In this application, the types of batteries may include a lithium-ion battery, a lithium-sulfur battery, a sodium-lithium-ion battery, a sodium-ion battery, a magnesium-ion battery, or the like. The type of the battery is not limited herein. A battery cell packaged in the battery may be in various shapes such as cylindrical, flat, cuboidal or other shapes. The shape of the battery cell is not limited herein. In terms of the packaging form, the battery cell is typically classed into three types: cylindrical battery cell, prismatic battery cell, and pouch-type battery cell. The type of the battery cell is not limited herein.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box prevents liquid or other foreign matters from affecting the charging or discharging of the battery cells.

A battery cell includes an electrode assembly and an electrolyte. The electrode assembly includes a positive electrode plate, a negative electrode plate, and a separator. The battery cell works primarily by shuttling metal ions between the positive electrode plate and the negative electrode plate. The positive electrode plate includes a positive current collector and a positive active material layer. A surface of the positive current collector is coated with the positive active material layer. Of the positive current collector, a part uncoated with the positive active material layer protrudes from a part coated with the positive active material layer. The part, uncoated with the positive active material layer, of the positive current collector, serves as a positive tab. In addition, the electrode assembly may be of a j elly-roll type structure or a stacked type structure, without being limited herein.

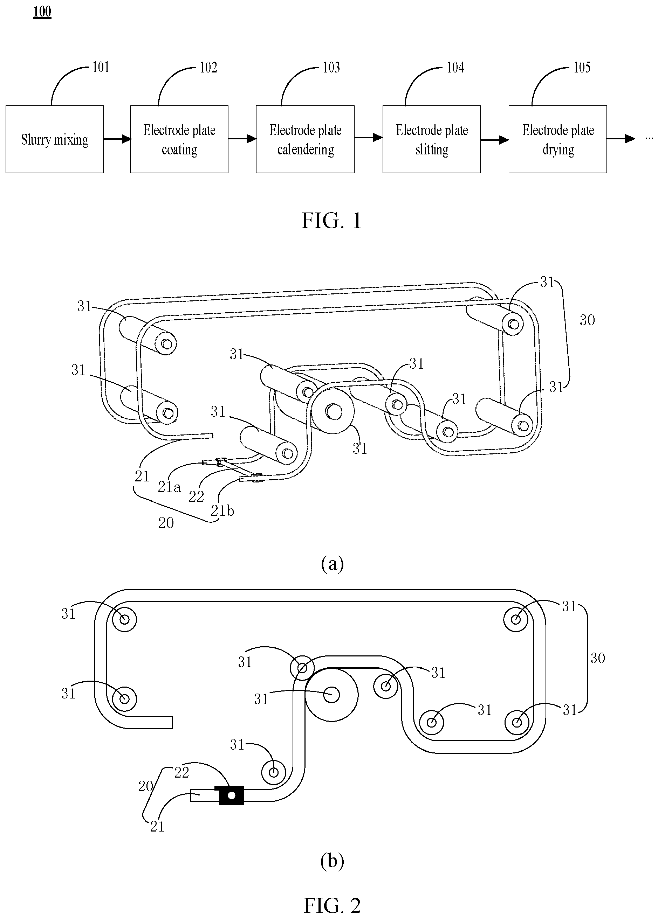

As shown in FIG. 1, as an example, an electrode plate manufacturing process in battery production may be divided into slurry mixing 101, electrode plate coating 102, electrode plate calendaring 103, electrode plate slitting 104, electrode plate drying 105, and the like. An objective of the electrode plate calendaring is to implement tighter bonding between an active material and a current collector, make the active material more homogeneous in thickness, and in turn, enhance a compaction density of the electrode plate. The electrode plate is an important component of the battery cell, and the preparation efficiency of the electrode plate is critical to the manufacturing of the battery cell. It is worth noting that the electrode plate is a thin sheet structure, or in other words, the electrode plate is a thin sheet-like structure. During the preparation of the electrode plate, the thin sheet structure needs to be passed through an idler mechanism to implement processes such as electrode plate coating and electrode plate calendaring stepwise. However, when the electrode plate passes through the idler mechanism, the electrode plate may break off due to a plurality of factors. In this case, the broken electrode plates need to be spliced at the break point.

In the electrode plate preparation process, the strip material is typically spliced or threaded in a splicing apparatus by using a chain, a wire rope, a belt, a synchronous belt, and the like. The splicing apparatus is complicated in structure and costly, and is unable to close a loop over a long distance. The splicing apparatus needs to be disposed in sections, and incurs problems such as taking up a lot of space and causing environmental pollution and generating metal particles by friction during operation. In an embodiment of this application, the splicing apparatus is also referred to as a strip threading apparatus.

In view of the situation above, this application provides a strip threading apparatus, including a slide rail, a slide rod apparatus, and a traction body. The slide rail is disposed along a conveyance path of a strip material. The slide rod apparatus is detachably connected to the slide rail. The traction body is slidable along the slide rail. When the strip material breaks, the strip threading apparatus is configured to connect the broken strip material at the break point to implement splicing of the strip material. The strip threading apparatus according to this application can be disposed in one piece along the conveyance path of the strip material, and splice the strip material in a case of breakage of the strip material. The entire strip threading apparatus is easy to use, and can enhance the production efficiency of the electrode plate.

The following exemplarily describes in detail a strip threading apparatus according to an embodiment of this application with reference to FIG. 2 to FIG. 5.

FIG. 2 shows a schematic structural diagram of a strip threading apparatus according to an embodiment of this application. Subfigure (a) of FIG. 2 shows a three-dimensional view of a strip threading apparatus according to an embodiment of this application, and subfigure (b) of FIG. 2 shows a side view of a strip threading apparatus according to an embodiment of this application.

As shown in FIG. 2, the strip threading apparatus 20 includes a slide rail 21, a slide rod apparatus 22, and a traction body 23 (not shown in FIG. 2). The slide rail 21 is disposed along the conveyance path of the strip material. The slide rod apparatus 22 is detachably connected to the slide rail 21. The traction body 23 can slide along the slide rail.

Understandably, a connection manner of structures included in the strip threading apparatus 20 may be: when the strip material is broken into a first strip and a second strip, the slide rod apparatus 22 is connected to the slide rail 21 at a break end of the second strip material, and connected to the second strip material; the traction body 23 slides to the break end of the second strip material, so as to pull the slide rod apparatus 22 to slide along the slide rail 21 to the break end of the first strip material. In this way, the first strip material and the second strip material are spliced. The first strip material is upstream of the second strip material along the conveyance direction of the strip material.

Therefore, the slide rail 21 is disposed along the conveyance path of the strip material. The slide rod apparatus 22 is disposed and detachably connected to the slide rail 21. The traction body 23 is disposed and slidable along the slide rail 21. In this way, when the strip material is broken, the broken strip material can be spliced. In this way, on the conveyance path of the strip material, the slide rail 21 is disposed in one piece. The slide rod apparatus 22 is detachably connected to any position on the slide rail 21. The strip material can be spliced at any time. The structure is simple, and the operations are convenient, thereby enhancing production efficiency of electrode plates, and in turn, enhancing production efficiency of batteries.

It is worth noting that the slide rail 21 of the strip threading apparatus 20 is disposed along the conveyance path of the strip material. The conveyance path of the strip material may be implemented by disposing an idler mechanism. For example, in FIG. 2, the idler mechanism 30 includes a plurality of idlers 31. The strip material passes around the idler 31 so as to be conveyed from an unwinding apparatus to a winding apparatus. The unwinding apparatus and the winding apparatus are not shown in FIG. 2. The specific structures of the unwinding apparatus and the winding apparatus are not limited herein. Optionally, the slide rail may be as close as possible to the idler mechanism, and the minimum turning radius of the slide rail may be 300 mm.

It is also worth noting that the strip threading apparatus 20 according to an embodiment of this application is not only configured to splice broken strip materials, but also configured to convey the strip material from the unwinding apparatus to the winding apparatus in an initial stage. The functions of the strip threading apparatus are not limited herein.

It is also worth noting that the shape and structure of the conveyance path of the strip material may vary, but are not limited to what is shown in FIG. 2. Depending on the conveyance path of the strip material, the shape of the slide rail may vary. Further, when the strip material is conveyed through the idler mechanism, the idlers included in the idler mechanism may assume various shapes and structures, and the shapes and structures are not limited herein.

It is also worth noting that, when the traction body 23 slides along the slide rail 21, the driving manner of the traction body 23 may be motor driving, pneumatic driving, or another driving manner. The driving manner is not limited herein.

In an embodiment of this application, the slide rail 21 shown in subfigure (a) of FIG. 2 may include a first rail 21a and a second rail 21b disposed opposite to each other. Optionally, the slide rail 21 may include one rail or a plurality of rails. The number of rails is not limited herein.

Therefore, the slide rail 21 includes the first rail 21a and the second rail 21b disposed opposite to each other, thereby restricting the conveyance direction of the strip material. The overall structure is symmetrical. During conveyance of the strip material, the force on the strip material is uniform, thereby facilitating splicing of the strip material.

In an embodiment of this application, the first rail 21a and/or the second rail 21b shown in subfigure (a) of FIG. 2 is a hollow sealed rail. The traction body 23 is configured to slide inside the sealed rail. For example, both the first rail 21a and the second rail 21b are hollow sealed rails. For another example, the first rail 21a is a hollow sealed rail, and the second rail 21b is a solid sealed rail. It is worth noting that when the sealed rail is a hollow structure, an inner wall in the sealed rail may be circular, arc-shaped, rectangular, or the like. The shape of the inner wall is not limited herein.

Therefore, the hollow sealed rail is used as the slide rail 21, thereby reducing the weight of the rail. The traction body 23 is disposed in the sealed rail, thereby reducing the space occupied by the strip threading apparatus.

Optionally, the sealed rail is a one-piece structure made by splicing a hollow material. The material of the sealed rail may be stainless steel, Teflon, or another non-magnetic material. The material of the sealed rail is not limited herein.

Optionally, the first rail 21a and/or the second rail 21b may assume another shape different from a circular tube. For example, in a direction perpendicular to the sliding direction of the slide rail 21, a cross-section of the first rail 21a and/or second rail 21b is elliptical, polygonal, or in an irregular shape or the like. The shape is not limited herein.

In an embodiment of this application, the sealed rail may be connected to a pneumatic control apparatus, so that the traction body 23 slides in the sealed rail under an action of a pneumatic pressure difference.

Optionally, the pneumatic control apparatus may include a proportional valve and a pneumatic control panel.

Therefore, the traction body 23 is pushed in the sealed rail by using the pneumatic pressure difference, thereby pushing the slide rod apparatus 22 to slide along the slide rail 21, avoiding the need of an additional traction apparatus, simplifying the structure, and reducing the weight of the strip threading apparatus.

Optionally, the sealed rail may be a sealed circular tube. Optionally, the outside diameter of the sealed circular tube may be 20 to 50 mm, for example, may be 20 mm, 25 mm, 30 mm, 35 mm, 40 mm, 45 mm, or 50 mm. The inside diameter of the sealed circular tube may be 16 to 46 mm, for example, 16 mm, 21 mm, 26 mm, 31 mm, 36 mm, 41 mm, or 46 mm. In this way, by limiting the size of the sealed circular tube, the sealed circular tube is strong enough but without occupying excessive space.

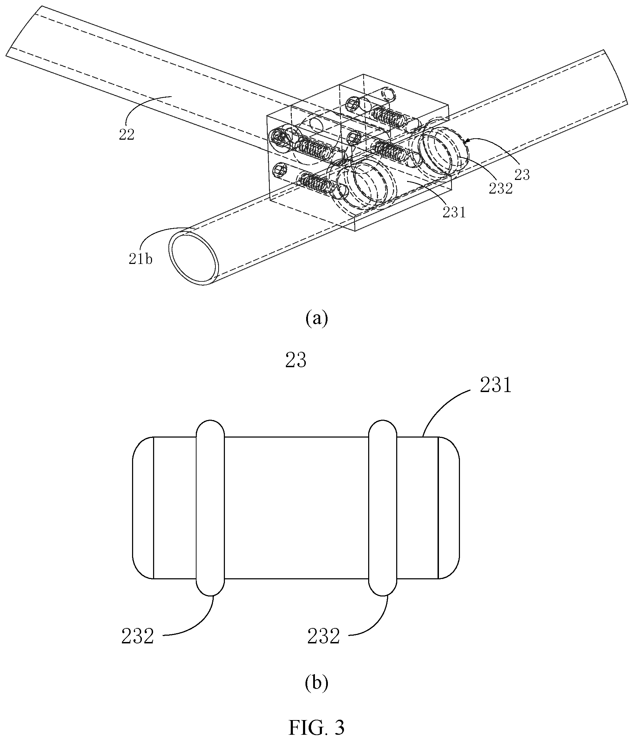

The following exemplarily describes the structure of the traction body 23 included in the strip threading apparatus 20 according to an embodiment of this application with reference to FIG. 3. Subfigure (a) of FIG. 3 shows a three-dimensional view of the traction body 23, and subfigure (a) of FIG. 3 shows a front view of the traction body 23.

In an embodiment of this application, the traction body 23 is magnetically connected to the slide rod apparatus 22 to pull the slide rod apparatus 22. As shown in FIG. 3, the second rail 21b is a hollow sealed rail. The traction body 23 may be disposed in the second rail 21b, and is magnetically connected to the slide rod apparatus 22. In this way, when sliding, the traction body 23 can drive the slide rod apparatus 22 to slide.

Optionally, the connection between the slide rod apparatus and the traction body may be implemented in another manner. The connection manner is not limited herein.

Therefore, with the traction body 23 being magnetically connected to the slide rod apparatus 22, the slide rod apparatus 22 can be driven to slide without direct contact between the traction body 23 and the slide rod apparatus 22, thereby avoiding the need of an additional connecting structure. The structure is simple and easy to implement.

In an embodiment of this application, as shown in FIG. 3, when the sealed rail is a sealed circular tube, the traction body 23 may include a cylindrical magnetic ball 231 and a sealing ring 232. A diameter of the magnetic ball 231 is less than an inside diameter of the sealed circular tube. The sealing ring 232 is socketed to a surface of the magnetic ball 231 to seal a clearance between the magnetic ball 231 and the sealed circular tube.

Optionally, an arcuate groove may be disposed on the surface of the magnetic ball 231. At least a part of the sealing ring 232 is placed in the arcuate groove. In this way, the connection between the sealing ring 232 and the magnetic ball 231 is tighter, thereby preventing the sealing ring 232 from being detached from the magnetic ball 231 when the traction body 23 is sliding.

Therefore, the traction body 23 is designed to include a magnetic ball 231 and a sealing ring 232. In this way, an attraction force between the magnetic ball 231 and the slide rod apparatus 22 is greater, a firmer magnetic connection is implemented between the magnetic ball and the slide rod apparatus, and the gas is isolated between the two ends of the traction body 23. In this way, the pneumatic pressure difference can vary between the two ends. Under the action of the pneumatic pressure difference, the traction body 23 can slide along the sealed circular tube.

Optionally, the difference between the diameter of the magnetic ball 231 and the inside diameter of the sealed circular tube is 1 to 3 mm, and the difference may be 1 mm, 1.5 mm, 2 mm, 2.5 mm, or 3 mm. Therefore, by defining the difference between the diameter of the magnetic ball 231 and the inside diameter of the sealed circular tube, a clearance is left between the magnetic ball and the sealed circular tube. In this way, it is ensured that, when the magnetic ball 231 moves to a position at which the bending radius of the sealed circular tube is relatively small, the magnetic ball 231 can turn the corner smoothly, and at the same time, the magnetic force is relatively strong and the magnetic connection is stable between the magnetic ball 231 and the slide rod apparatus 22, thereby enhancing the strip threading/splicing efficiency of the entire strip threading apparatus 20.

Optionally, a length of the magnetic ball 231 along a conveyance direction of the strip material may be 40 to 100 mm, for example, may be 60 mm. Therefore, by defining the length of the magnetic ball 231 and specifying the optimized length value of the magnetic ball 231, this application implements smooth sliding of the magnetic ball 231 in the sealed circular tube while implementing a relatively strong magnetic connection between the magnetic ball 231 and the slide rod apparatus 22.

Optionally, the material of the magnetic ball 231 may be a highly magnetic material, such as a neodymium iron boron magnet. The magnetic field intensity on the surface may be 10000 to 15000 Gauss. The polarities are N pole and S pole respectively along a cylindrical axis direction of the magnetic ball 231.

Optionally, a chamfered rounded corner structure is formed at both ends of the magnetic ball 231 along a conveyance direction of the strip material, thereby ensuring that the magnetic ball 231 can turn the corner smoothly when the magnetic ball 231 slides to a position of a minimum turning radius in the slide rail 21.

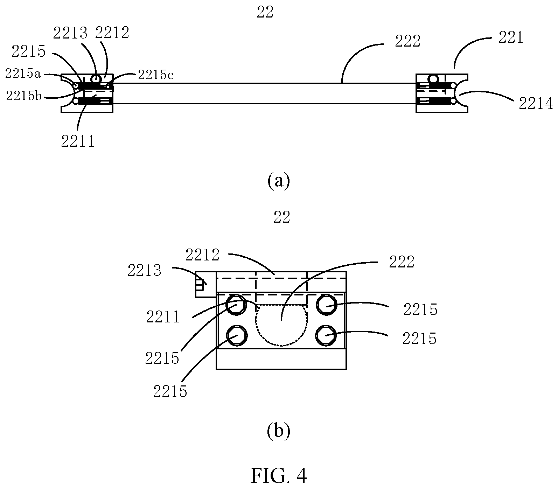

The following exemplarily describes a slide rod apparatus 22 according to an embodiment of this application with reference to FIG. 4. FIG. 4 shows a schematic structural diagram of a slide rod apparatus 22 included in a strip threading apparatus 20 according to an embodiment of this application. Subfigure (a) of FIG. 4 shows a front view of the slide rod apparatus 22, and subfigure (b) of FIG. 4 shows a side view of the slide rod apparatus 22.

In an embodiment of this application, as shown in FIG. 4, the slide rod apparatus 22 includes a connecting rod 222 and a slide block mechanism 221. An end portion of the connecting rod 222 is connected to the slide block mechanism 221. The slide block mechanism 221 is slidably connected to the slide rail 21.

Therefore, the slide rod apparatus 22 is constrained in the slide rail 21, and the slide rod apparatus 22 can slide by means of the slide block mechanism 221. The structure is simple and easy to implement.

In an embodiment of this application, a mounting slot 2211 is disposed on the slide block mechanism 221. The end portion of the connecting rod 222 is disposed in the mounting slot 2211 so as to get connected to the slide block mechanism 221.

Therefore, a mounting slot 2211 for mounting the end portion of the connecting rod 222 is disposed on the slide block mechanism 221, so that the connecting rod 222 can be connected to the slide block mechanism 221. The connecting rod 222 is detachable from the slide block mechanism, so that the slide rod apparatus 22 can be easily connected to any position on the slide rail 21. The structure is simple and the operations are convenient.

In an embodiment of this application, the slide block mechanism 221 may further include a pressing block 2212. The pressing block 2212 is configured to compact the end portion of the connecting rod 222 in the mounting slot 2211 after the end portion of the connecting rod 222 is disposed in the mounting slot 2211.

Therefore, the connecting rod 222 is compacted by the pressing block 2212, so that the connection between the connecting rod 222 and the slide block mechanism 221 is firmer. This connection manner is simple in structure and easy to operate.

In an embodiment of this application, a surface in contact with the pressing block 2212 at the end portion of the connecting rod 222 is a flat face. In this way, the flat face enables the pressing block 2212 to compact the end portion of the connecting rod 222 more firmly, and makes the bonding tighter.

In an embodiment of this application, the slide block mechanism 221 may further include a fixing piece 2213 configured to fix the pressing block 2212. For example, the fixing piece 2213 is a bolt. The bolt penetrates the fixing piece 2213 so that the pressing block 2212 is fixed to the slide block mechanism 221. In this way, the connecting rod 222 is fixed to the slide block mechanism 221. The connecting rod is detachable from the slide block mechanism. The structure is simple, and the operations such as mounting and disassembling are easy.

In an embodiment of this application, a slide slot 2214 is disposed on the slide block mechanism 221. The slide block mechanism is slidably connected to the slide rail 21 through the slide slot 2214. In this way, the slide block mechanism 221 is constrained in the slide rail 21 by means of the slide slot 2214, and further, the slide rod apparatus 22 is constrained in the slide rail 21, thereby simplifying the connection manner between the slide rod apparatus 22 and the slide rail 21. The structure is simple and easy to implement.

Optionally, the diameter of the slide slot 2214 may be 21 to 53 mm, for example, may be 21 mm, 27 mm, 30 mm, 32 mm, 37 mm, 40 mm, 42 mm, 47 mm, 50 mm, 52 mm, or 53 mm. Alternatively, the difference between the diameter of the slide slot 2214 and the outside diameter of the sealed circular tube may be 1 to 3 mm. In this way, the diameter of the slide slot 2214 is defined, thereby preventing the slide rod apparatus 22 from being stuck at a position of a relatively small bending radius of the sealed circular tube, and at the same time, ensuring stability of the magnetic connection between the slide rod apparatus 22 and the traction body 23, and enhancing the threading/splicing efficiency of the strip threading apparatus 20.

In an embodiment of this application, the slide block mechanism 221 may further include a guide apparatus 2215. In a case that the slide rail 21 is accommodated in the slide slot 2214, the guide apparatus 2215 abuts on the slide rail 21 to constrain the slide block mechanism 221.

Therefore, the guide apparatus 2215 disposed in the slide block mechanism 221 can constrain the slide block mechanism 221 and limit the sliding direction of the slide block mechanism 221, thereby facilitating the operations of strip threading or splicing.

In an embodiment of this application, the guide apparatus 2215 includes a ball 2215a, a spring 2215b, and an adjustable jackscrew 2215c. The ball 2215a abuts on the slide rail 21 so that the slide block mechanism 221 slides along the slide rail 21. The spring 2215b abuts on the ball 2215a. The adjustable jackscrew 2215c is configured to adjust deformation of the spring 2215b to adjust a relative position between the slide block mechanism 221 and the slide rail 21.

Therefore, the guide apparatus 2215 is designed to include the ball 2215a, spring 2215b, and adjustable jackscrew 2215c, so that the friction between the slide block structure 221 and the slide rail 21 is rolling friction that generates a relatively small friction force. In addition, the position of the slide block mechanism 221 relative to the slide rail 21 is adjusted by the spring 2215b, thereby implementing adjustability of the relative position, friction force, and the like between the slide rod apparatus 22 and the slide rail 21, and facilitating threading or splicing of the strip material.

It is worth noting that the material of the ball 2215a may be ceramic, thereby preventing metal particles from being generated by friction.

In an embodiment of this application, the slide block mechanism 221 may include four guide apparatuses 2215. The four guide apparatuses 2215 are disposed symmetrically.

Therefore, the four guide apparatuses 2215 are disposed symmetrically, thereby constraining the slide block mechanism 221 in three directions x, y, and z, positioning the slide rod apparatus 22, and facilitating the operations of strip threading or splicing.

Optionally, a clearance size between the slide slot 2214 and the slide rail 21 may be 1 to 3 mm. In this way, the clearance size between the slide slot 2214 and the slide rail 21 is defined, thereby preventing the slide rod apparatus 22 from being stuck at a position of a relatively small bending radius in the slide rail 21, and at the same time, ensuring stability of the magnetic connection between the slide rod apparatus 22 and the traction body 23, and enhancing the threading/splicing efficiency of the strip threading apparatus 20.

Optionally, a chamfered rounded corner structure is formed at both ends of the slide slot 2214 along the conveyance direction of the strip material, thereby preventing the slide rod apparatus 22 from being stuck at the position of a minimum turning radius when sliding along the slide rail 21.

Optionally, the connecting rod 222 is a hollow circular tube. For example, the outside diameter of the connecting rod 222 may be 30 mm, and the inside diameter of the connecting rod may be 20 mm. The material of the connecting rod 222 may be carbon steel, stainless steel, aluminum alloy, fiberglass, or the like, thereby ensuring sufficient strength of the connecting rod while reducing the weight of the connecting rod.

It is worth noting that at least a part of the structure of the slide block mechanism may be made of magnetic steel.

The structure of a strip threading apparatus according to some embodiments of this application has been described above. The strip threading apparatus 20 according to some embodiments of this application may be configured to splice a strip material. In other words, the strip material may be spliced by using the strip threading apparatus 20 shown in FIG. 2 to FIG. 4.

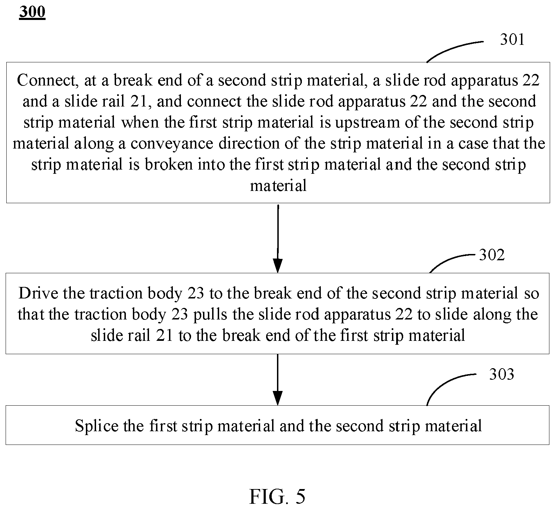

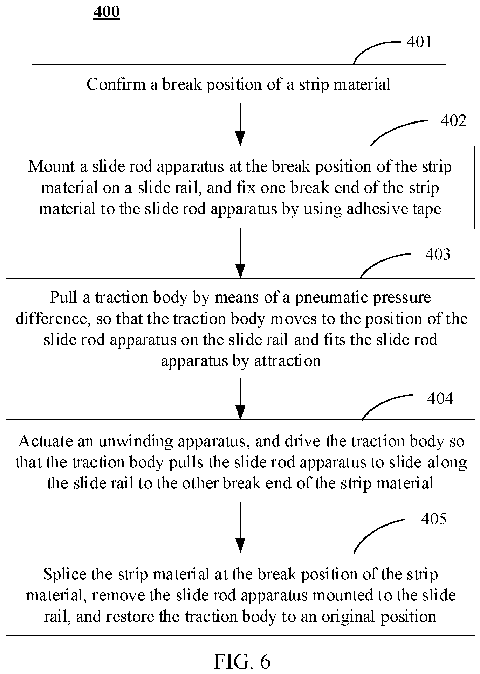

The following exemplarily describes a method for splicing a strip material by using a strip threading apparatus according to an embodiment of this application with reference to FIG. 5 and FIG. 6.

As shown in FIG. 5, the method 300 for splicing a strip material by using a strip threading apparatus includes:

301. Connecting, at a break end of the second strip material, the slide rod apparatus 22 and the slide rail 21, and connecting the slide rod apparatus 22 and the second strip material when the first strip material is upstream of the second strip material along the conveyance direction of the strip material in a case that the strip material is broken into the first strip material and the second strip material.

In this embodiment of this application, the slide rod apparatus 22 is detachably connected to the slide rail 21. Therefore, the slide rod apparatus 22 can be connected to any position on the slide rail 21, such as a position corresponding to the break end of the second strip material on the slide rail 21. Subsequently, after the slide rod apparatus 22 is fixed, the slide rod apparatus 22 may be connected to the second strip material. For example, the second strip material may be connected to the slide rod apparatus by adhesive tape.

302. Driving the traction body 23 to the break end of the second strip material so that the traction body 23 pulls the slide rod apparatus 22 to slide along the slide rail 21 to the break end of the first strip material.

In this embodiment of this application, the traction body 23 can be driven to the break end of the second strip material by means of a pneumatic pressure difference or other means. In this way, the traction body 23 can be connected to the slide rod apparatus 22 at the break end of the second strip material. Subsequently, the traction body 23 can pull the slide rod apparatus 22 to move, for example, pull the slide rod apparatus 22 to slide along the slide rail 21 to the break end of the first strip material.

303. Splicing the first strip material and the second strip material.

In this embodiment of this application, the slide rod apparatus 22 drives the break end of the second strip material to slide to the break end of the first strip material. The break end of the first strip material is close to the break end of the second strip. The two break ends may be connected by adhesive tape or the like, so that the first strip material and the second strip material are spliced.

Therefore, the strip material is spliced by using the above strip threading apparatus 20. The splicing method is simple, and enables quick splicing of the strip material, thereby enhancing the production efficiency of batteries.

As shown in FIG. 6, the method 400 for splicing a strip material by using a strip threading apparatus includes the following steps:

401. Confirming the break position of the strip material. For example, the position at which the strip material breaks can be manually determined so that the strip material can be spliced at the confirmed position subsequently.

402. Mounting the slide rod apparatus 22 at the break position of the strip material on the slide rail 21, and fixing one break end of the strip material to the slide rod apparatus 22 by using adhesive tape. For example, after the break position of the strip material is confirmed, the slide rod apparatus 22 is manually mounted to the confirmed break position of the strip material. Subsequently, the break end of the strip material is fixed to the slide rod apparatus 22 so that the slide rod apparatus 22 can pull the strip material from one break end to the other break end of the strip material.

It is worth noting that, in the conveyance direction of the strip material, one break end of the strip material fixed to the slide rod apparatus 22 is located downstream of the other break end of the strip material not fixed to the slide rod apparatus 22.

403. Pulling the traction body 23 by means of a pneumatic pressure difference, so that the traction body 23 moves to the position of the slide rod apparatus 22 on the slide rail 21 and fits the slide rod apparatus 22 by attraction. For example, when the traction body 23 includes the magnetic ball 231 shown in FIG. 5 and the traction body 23 is located in the sealed circular tube, the traction body 23 can be pushed to slide in the sealed circular tube, and fit the slide rod apparatus 22 by magnetic attraction at the mounting position of the slide rod apparatus 22.

Optionally, a pushing force can be applied to the traction body 23. When the pushing force is greater than the friction force between the traction body 23 and the slide rail 21, the traction body 23 can be caused to slide in the sealed circular tube of the slide rail 21, and fit the slide rod apparatus 22 by magnetic attraction at the mounting position of the slide rod apparatus 22. For example, a pushing force greater than the friction force by 50 to 20 N, such as 5 N, may be applied to the traction body 23, so that the traction body 23 slides in the sealed circular tube until the traction body fits the slide rod apparatus 22 by magnetic attraction.

404. Actuating the unwinding apparatus, and driving the traction body 23 so that the traction body 23 pulls the slide rod apparatus 22 to slide along the slide rail 21 to the other break end of the strip material.

Optionally, the pushing force required to drive the traction body 23 may be greater than the friction force by 20 to 100 N, such as 30 N, so that the traction body 23 can pull the slide rod apparatus 22 and further pull the strip material to implement strip splicing.

It is worth noting that the actuation of the unwinding apparatus and the driving of the traction body may be performed simultaneously or sequentially. However, the time difference of occurrence between the two operations needs to fall within a specified time range to ensure that the strip material can move along the slide rail.

It is also worth noting that, in the conveyance direction of the strip material, the other break end of the strip material is located upstream of one break end of the strip material.

405. Splicing the strip material at the break position of the strip material, removing the slide rod apparatus 22 mounted to the slide rail 21, and restoring the traction body 23 to an original position.

In this embodiment of this application, after the strip material is spliced, the slide rod apparatus 22 connected to the slide rail 21 is manually removed, and a pressure is applied to the traction body 23, so that the traction body 23 slides to the original position, that is, is restored to the original position.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. A strip threading apparatus, **characterized in that** the strip threading apparatus (20) comprises:
a slide rail (21), wherein the slide rail (21) is disposed along a conveyance path of a strip material;
a slide rod apparatus (22), wherein the slide rod apparatus (22) is detachably connected to the slide rail (21); and
a traction body (23), wherein the traction body (23) is slidable along the slide rail (21).

2. The strip threading apparatus according to claim 1, **characterized in that** the slide rail (21) comprises a first rail (21a) and a second rail (21b) disposed opposite to each other.

3. The strip threading apparatus according to claim 2, **characterized in that** the first rail (21a) and/or the second rail (21b) is a hollow sealed rail, and the traction body (23) is configured to slide inside the sealed rail.

4. The strip threading apparatus according to claim 3, **characterized in that** the sealed rail is connected to a pneumatic control apparatus, so that the traction body (23) slides in the sealed rail under an action of a pneumatic pressure difference.

5. The strip threading apparatus according to claim 3 or 4, **characterized in that** the traction body (23) is magnetically connected to the slide rod apparatus (22) to pull the slide rod apparatus (22).

6. The strip threading apparatus according to any one of claims 3 to 5, **characterized in that**, when the sealed rail is a sealed circular tube, the traction body (23) comprises a cylindrical magnetic ball (231) and a sealing ring (232), a diameter of the magnetic ball (231) is less than an inside diameter of the sealed circular tube, and the sealing ring (232) is socketed to a surface of the magnetic ball (231) to seal a clearance between the magnetic ball (231) and the sealed circular tube.

7. The strip threading apparatus according to claim 6, **characterized in that** a difference between the diameter of the magnetic ball (231) and the inside diameter of the sealed circular tube is 1 to 3 mm.

8. The strip threading apparatus according to claim 6 or 7, **characterized in that** a length of the magnetic ball (231) along a conveyance direction of the strip material is 40 to 100 mm.

9. The strip threading apparatus according to any one of claims 6 to 8, **characterized in that** a chamfered rounded corner structure is formed at both ends of the magnetic ball (231) along a conveyance direction of the strip material.

10. The strip threading apparatus according to any one of claims 1 to 9, **characterized in that** the slide rod apparatus (22) comprises a connecting rod (222) and a slide block mechanism (221), an end portion of the connecting rod (222) is connected to the slide block mechanism (221), and the slide block mechanism (221) is slidably connected to the slide rail (21).

11. The strip threading apparatus according to claim 10, **characterized in that** a mounting slot (2211) is disposed on the slide block mechanism (221), and the end portion of the connecting rod (222) is disposed in the mounting slot (2211) so as to get connected to the slide block mechanism (221).

12. The strip threading apparatus according to claim 11, **characterized in that** the slide block mechanism (221) comprises a pressing block (2212) configured to compact the end portion of the connecting rod (222) in the mounting slot (2211) after the end portion of the connecting rod (222) is disposed in the mounting slot (2211).

13. The strip threading apparatus according to claim 12, **characterized in that** a surface in contact with the pressing block (2212) at the end portion of the connecting rod (222) is a flat face.

14. The strip threading apparatus according to claim 12 or 13, **characterized in that** the slide block mechanism (221) further comprises a fixing piece (2213) configured to fix the pressing block (2212).

15. The strip threading apparatus according to any one of claims 10 to 14, **characterized in that** a slide slot (2214) is disposed on the slide block mechanism (221), and the slide block mechanism (221) is slidably connected to the slide rail (21) through the slide slot (2214).

16. The strip threading apparatus according to claim 15, **characterized in that** the slide block mechanism (221) comprises a guide apparatus (2215), and, in a case that the slide rail (21) is accommodated in the slide slot (2214), the guide apparatus (2215) abuts on the slide rail (21) to constrain the slide block mechanism (221).

17. The strip threading apparatus according to claim 16, **characterized in that** the guide apparatus (2215) comprises a ball (2215a), a spring (2215b), and an adjustable jackscrew (2215c); the ball (2215a) abuts on the slide rail (21) so that the slide block mechanism (221) slides along the slide rail (21); the spring (2215b) abuts on the ball (2215a); and the adjustable jackscrew (2215c) is configured to adjust deformation of the spring (2215b) to adjust a relative position between the slide block mechanism (221) and the slide rail (21).

18. The strip threading apparatus according to claim 16 or 17, **characterized in that** the slide block mechanism (221) comprises four guide apparatuses (2215), and the four guide apparatuses (2215) are disposed symmetrically.

19. The strip threading apparatus according to any one of claims 15 to 18, **characterized in that** a clearance size between the slide slot (2214) and the slide rail (21) is 1 to 3 mm.

20. The strip threading apparatus according to any one of claims 15 to 19, **characterized in that** a chamfered rounded corner structure is formed at both ends of the slide slot (2214) along a conveyance direction of the strip material.

21. The strip threading apparatus according to any one of claims 10 to 20, **characterized in that** the connecting rod (222) is a hollow circular tube.

22. A method for splicing a strip material by using a strip threading apparatus, **characterized in that** the strip material is spliced by using the strip threading apparatus (20) according to any one of claims 1 to 21.

23. The method according to claim 22, **characterized in that** the strip material is broken into a first strip material and a second strip material, the first strip material is upstream of the second strip material along a conveyance direction of the strip material, and the method comprises:
connecting, at a break end of the second strip material, the slide rod apparatus (22) and the slide rail (21), and connecting the slide rod apparatus (22) and the second strip material;
driving the traction body (23) to the break end of the second strip material so that the traction body (23) pulls the slide rod apparatus (22) to slide along the slide rail (21) to the break end of the first strip material; and
splicing the first strip material and the second strip material.
